# EUROPÄISCHE PATENTSCHRIFT

(11) **EP 2 379 984 B1**
(45) Veröffentlichungstag und Bekanntmachung des Hinweises auf die Patenterteilung: **24.02.2016**
(21) Anmeldenummer: 09748067.7
(22) Anmeldetag: 20.10.2009
(51) Int. Cl.: G01C 3/08, G01S 7/481, G01S 17/08

(54) **EMPFÄNGERLINSENSYSTEM SOWIE OPTISCHER ENTFERNUNGSMESSER**
RECEIVER LENS SYSTEM AND OPTICAL DISTANCE MEASURING DEVICE
SYSTÈME DE LENTILLES RÉCEPTRICES ET TÉLÉMÈTRE OPTIQUE

(30) Priorität: 17.12.2008 DE 102008054785
(43) Veröffentlichungstag der Anmeldung: 26.10.2011
(73) Patentinhaber: Robert Bosch GmbH, 70442 Stuttgart (DE)
(72) Erfinder: RICHARD, Matthieu, F-25160 Remoray (FR); HAASE, Bjoern, 70184 Stuttgart (DE)
(86) Internationale Anmeldenummer: PCT/EP2009/063700
(87) Internationale Veröffentlichungsnummer: WO 2010/069634

(56) Entgegenhaltungen:
- DE-A1- 2 853 978
- DE-A1-102004 038 257

## Beschreibung

### Stand der Technik

Die Erfindung betrifft ein Empfängerlinsensystem eines optischen Entfernungsmessers gemäß dem Oberbegriff des Anspruchs 1 sowie einen optischen Entfernungsmesser mit einem Empfängerlinsensystem gemäß Anspruch 6.

Laserentfernungsmesser werden üblicherweise unter harschen Bedingungen auf Baustellen eingesetzt. In der Konsequenz müssen Laserentfernungsmesser, insbesondere deren optische Systeme tolerant sein im Hinblick auf Temperatur-, Feuchtigkeits- und Schmutzeinwirkungen. Darüber hinaus sollten Laserentfernungsmesser exzellente optische Eigenschaften aufweisen, um Messungen sowohl im Nahbereich als auch über Strecken von bis zu mehreren einhundert Metern mit minimalsten Messfehlern ausführen zu können. Problematisch dabei ist, dass ein einem Photodetektor zugeordnetes Empfängerlinsensystem sowohl Laserlicht auf dem Photodetektor abbilden soll, welches von sehr weit entfernten als auch sehr nahegelegenen Objekten reflektiert wird. Bei nur gering beabstandeten Objekten fällt hierbei ein Parallaxewinkel zwischen einer optischen Achse des Empfängerlinsensystems und einem ausgesendeten Messstrahl ins Gewicht, welcher bei der Messung großer Entfernungen vernachlässigbar ist.

Die DE 10 2004 038 257 A1 offenbart einen optischen Sensor zum Erkennen von Objekten und umfasst in einem Überwachungsbereich einen Sendelichtstrahler emittierenden Sender, einen Empfangslichtstrahlen empfangenden, Empfänger und eine Auswerteeinheit zur Generierung eines Objektfeststeliungssignals in Abhängigkeit der Empfangssignale am Ausgang des Empfängers. Der Sender und der Empfänger der Vorrichtung der DE 10 2004 038 257 A1 sind koaxial angeordnet einer Sende- und Empfangsoptik zugeordnet. Der zentrale Bereich der Sende- und Empfangsoptik dient zur Kollimation der Sendelichtstrahlen und der äußere Bereich dient zur Fokussierung der Empfangslichtstrahlen auf den Empfänger. Die Sende- und Empfangsoptik der Vorrichtung der DE 10 2004 038 257 A1 besteht aus einem Glassubstrat in Form einer sphärischen Plankonvexlinse mit auf deren oberer Rückseite aufgedruckten KunststoffSchichten. Die Kunststoffschichten auf der Rückseite des Glassubstrats weisen zwar einen Brechungsindex mit höherer Temperaturdrift auf, jedoch ist das Gesamtsystem der Sende- und Empfangsoptik infolge des voluminösen Glaskörpers unempfindlich gegen Temperaturdriften. Die Kunststoffschichten können leicht in der jeweils gewünschten Form auf das Glassubstrat aufgebraucht werden, wobei mit den Kunststoffschichten auf einfache Weise asphärische Formen realisierbar sind. Die Dicke der Kunststoffschicht beträgt typischerweise 0,3 mm bis 1 mm.

Aus der DE 28 53 978 A1 ist ein optischer Entfernungsmesser mit einer Empfangslinse bekannt, der nach dem Triangulationsprinzip arbeitet.

### Offenbarung der Erfindung

### Technische Aufgabe

Der Erfindung liegt die Aufgabe zugrunde, ein verbessertes Empfängerlinsensystem für einen optischen Entfernungsmesser vorzuschlagen, das unempfindlicher ist gegenüber Temperatur- und/oder Feuchtigkeits- und/oder Schmutzeinwirkungen. Bevorzugt soll es der Aufbau des verbesserten Empfängerlinsensystems erleichtert ermöglichen, wasserdichte und/oder schmutzdichte Gehäuse für einen optischen Entfernungsmesser, insbesondere einen Laserentfernungsmesser, zu konstruieren. Darüber hinaus ist es bevorzugt, wenn das Empfängerlinsensystem sowohl für den Einsatz im Nahbereich als auch im Fernbereich einsetzbar ist. Ganz besonders bevorzugt soll das Empfängerlinsensystem möglichst kostengünstig realisierbar sein. Ferner besteht die Aufgabe darin, einen optischen Entfernungsmesser, insbesondere einen Laserentfernungsmesser, mit einem wie zuvor beschrieben ausgebildeten Empfängerlinsensystem vorzuschlagen.

### Technische Lösung

Diese Aufgabe wird hinsichtlich des Empfängerlinsensystems mit den Merkmalen des Anspruchs 1 und hinsichtlich des optischen Entfernungsmessers mit den Merkmalen des Anspruchs 6 gelöst. Vorteilhafte Weiterbildungen der Erfindung sind in den Unteransprüchen angegeben. Der Erfindung liegt der Gedanke zugrunde, mindestens eine Kunststofflinse mit mindestens einer Glaslinse zur Bildung des Empfängerlinsensystems zu paaren, wobei es im Rahmen der Erfindung liegt, ausschließlich eine Kunststofflinse und/oder ausschließlich eine Glaslinse vorzusehen. Durch den Einsatz mindestens einer Glaslinse und mindestens einer Kunststofflinse können deren jeweilige Vorteile optimal kombiniert werden. So ist eine Glaslinse vergleichsweise unempfindlich gegenüber Temperatur- und Feuchtigkeitsänderungen, insbesondere im Hinblick auf die fokale Länge. Darüber hinaus sind sphärische Standardglaslinsen kostengünstig und unempfindlich gegenüber Verschmutzungen. Der Vorteil von Kunststofflinsen besteht darin, dass diese wesentlich einfacher derart ausgebildet werden können, dass mit diesen Abbildungsfehler korrigiert werden können. So können Kunststofflinsen im Vergleich zu Glaslinsen vergleichsweise kostengünstig mit einer entsprechenden asphärischen Oberfläche versehen werden, insbesondere um einen Parallaxewinkel, wie dieser bei den meisten optischen Entfernungsmessern aufgrund der Nebeneinanderanordnung des Empfängerlinsensystems und der, vorzugsweise als Laserlichtquelle ausgebildeten, Lichtquelle auftritt, auszugleichen.

Besonders bevorzugt ist eine Ausführungsform des Empfängerlinsensystems, bei der die Kunststofflinse im Strahlengang zwischen der Glaslinse und einem Photodetektor angeordnet ist, die Glaslinse also die vorderste Linse im Empfängerstrahlengang ist. Dies ist insoweit von entscheidendem Vorteil, als dass Glaslinsen, wie zuvor erläutert, weniger feuchtigkeits-, temperatur- und schmutzempfindlich sind und sich somit zum Abschluss eines Gehäuses eines optischen Entfernungsmessers nach außen eignen. Darüber hinaus wird durch die Anordnung der Glaslinse als vorderste Linse im Strahlengang erleichtert ermöglicht, das Gehäuse wasserdicht, vorzugsweise bis zu einer Wassertiefe von einem Meter, zumindest jedoch spritzwassergeschützt, auszubilden. Die mindestens eine Kunststofflinse befindet sich innerhalb des Gehäuses und ist somit vor Feuchtigkeits- und Schutzeinflüssen optimal geschützt.

Ganz besonders bevorzugt ist eine Ausführungsform des Empfängerlinsensystems, bei der die Glaslinse als sphärische Linse ausgebildet ist, also mindestens eine sphärische Linsenseite aufweist. Bevorzugt handelt es sich bei der Glaslinse um eine Standardglaslinse, vorzugsweise um eine plankonvexe Linse. Zusätzlich oder alternativ ist es möglich, die Kunststofflinse als asphärische Linse, also als Linse ohne eine sphärische Linsenseite auszubilden, um auf diese Weise Abbildungsfehler zu korrigieren.

In Weiterbildung der Erfindung ist mit Vorteil vorgesehen, dass die Wellenfront des empfangenen Laserlichts wesentlich stärker an der Glaslinse gekrümmt wird (hohe Vergenz), als an der Kunststofflinse (niedrige Vergenz). Hierzu weist die Glaslinse bevorzugt einen wesentlich höheren Brechungsindex auf als die Kunststofflinse. Da der Brechungsindex der Glaslinse im Wesentlichen unbeeinflusst ist von Temperatur- und/oder Feuchtigkeitsschwankungen wirken sich somit Temperatur- und/oder Feuchtigkeitsänderungen nur unwesentlich auf die Gesamtperformance des Empfängerlinsensystems aus.

Erfindungsgemäß ist vorgesehen, dass der Abstand der Glaslinse und der Kunststofflinse, zumindest bei der Montage des Empfängerlinsensystems, einstellbar ist, um hierdurch die fokale Länge der Linsenanordnung anzupassen. Bevorzugt ist dabei die, insbesondere vordere, Glaslinse feststehend und die Kunststofflinse verstellbar angeordnet, was sich wiederum positiv auf die Eignung des Empfängerlinsensystems zur Integration in ein, zumindest spritzwasser- und schmutzgeschütztes, Gehäuse auswirkt. Durch die verstellbare Anordnung mindestens einer der Linsen, vorzugsweise ausschließlich der Kunststofflinse, können Fertigungstoleranzen, die bei der Fertigung der Linsen unvermeidbar auftreten, ausgeglichen werden. Die optimierte Eignung zur Herstellung zumindest spritzwassergeschützter Gehäuse für optische Entfernungsmesser ist darauf zurückzuführen, dass die vorderste, vorzugsweise in einer Gehäusehalterung aufgenommene, Linse dauerhaft positionsfest ist und nicht verstellt werden muss, wodurch vergleichsweise einfach für eine optimale und zuverlässige Abdichtung zwischen dieser Linse und dem Gehäuse Sorge getragen werden kann. Durch die verstellbare Anordnung mindestens einer Linse, vorzugsweise ausschließlich der Kunststofflinse, können Fertigungstoleranzen auf einfache Weise ausgeglichen werden.

Ganz besonders bevorzugt ist es, wenn die Glaslinse des Empfängerlinsensystems antireflektionsbeschichtet ist. Das Vorsehen einer Antireflektionsbeschichtung bei Glaslinsen ist im Gegensatz zu Kunststofflinsen vergleichsweise einfach und kostengünstig möglich und wirkt sich positiv auf die optischen Eigenschaften des Empfängerlinsensystems aus.

Die Erfindung führt auch auf einen optischem Entfernungsmesser, vorzugsweise einen Laserentfernungsmesser, mit einem Empfängerlinsensystem nach einem der vorhergehenden Ansprüche. Bevorzugt ist der Ausgangsstrahlengang der Lichtquelle, vorzugsweise einer Laserlichtquelle, winklig zu dem Strahlengang des Empfängerlinsensystems angeordnet - es existiert also eine Parallaxe, die mit einem nach dem Konzept der Erfindung ausgebildeten Empfängerlinsensystem auf einfache Weise kostengünstig ausgeglichen werden kann.

Ganz besonders bevorzugt ist eine Ausführungsform des optischen Entfernungsmessers, bei der dessen Gehäuse wasserdicht, vorzugsweise bis zu einer Wassertiefe von einem Meter, zumindest jedoch spritzwassergeschützt und schmutzgeschützt ist. Dies kann insbesondere dadurch realisiert werden, dass eine vorderste Linse des Empfängerlinsensystems eine, insbesondere als Standardlinse ausgebildete, Glaslinse, ganz besonders bevorzugt eine sphärische Linse ist und innerhalb des Gehäuses mindestens eine, vorzugsweise ausschließlich eine, Kunststofflinse, insbesondere mit ausschließlich asphärischen Linsenseiten angeordnet ist.

Um die optische Achse des Empfängerlinsensystems relativ zu einer weiteren optischen Achse, insbesondere der optischen Achse des Ausgangsstrahls, also bevorzugt der Laserachse oder der Gehäuseachse zu verstellen, bestehen im wesentlichen zwei Möglichkeiten. Gemäß einer ersten Ausführungsform kann das gesamte Empfängerlinsensystem relativ zu dem Photodetektor verstellt werden. Gemäß der zweiten, alternativen Möglichkeit, wird lediglich mindestens eine, vorzugsweise ausschließlich eine Linse, ganz besonders bevorzugt die Kunststofflinse, des Empfängerlinsensystems relativ zu dem Photodetektor und zu mindestens einer weiteren Linse, vorzugsweise der Glaslinse des Empfängerlinsensystems, verstellt. Besonders bevorzugt ist dabei eine Ausführungsform, bei der eine Linse, vorzugsweise die Kunststofflinse sowohl in Richtung der optischen Achse als auch lateral hierzu verstellbar ist, um gleichzeitig die fokale Länge des Empfängerlinsensystems als auch die Lage der optischen Achse, d.h. die Parallaxe, einstellen zu können.

Das Versehen der Glaslinse/n mit dem größten Brechungsindex hat den Vorteil, dass dieser Brechungsindex kaum von Feuchtigkeits- und Temperatureinflüssen beeinflussbar ist. Die unweigerlich auftretenden Einflüsse eines Temperaturwechsels auf den Brechungsindex der mindestens einen Kunststofflinse wirken sich aufgrund des vorzugsweise minimalen Brechungsindex der Kunststofflinse insgesamt betrachtet nur wenig stark aus.

### Kurze Beschreibung der Zeichnungen

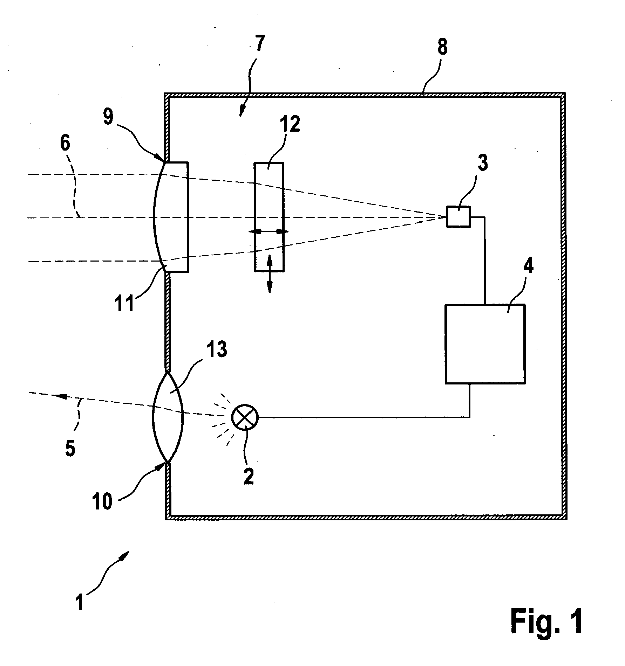

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen
- Fig. 1: eine schematische Darstellung eines als Laserentfernungsmesser ausgebildeten optischen Entfernungsmessers mit einem eine Glaslinse und eine Kunststofflinse umfassenden Empfängerlinsensystem.

### Ausführungsform der Erfindung

Fig. 1 zeigt in einer stark schematisierten Darstellung einen als Laserentfernungsmesser ausgebildeten optischen Entfernungsmesser 1 mit einer Laserlichtquelle 2, einem Photodetektor 3 sowie einer diesem zugeordneten Auswerteschaltung 4 die eine Entfernung zu einem nicht dargestellten Objekt auf Basis eines interferrometrischen Verfahrens oder einer Laufzeitmessung bestimmt.

Zu erkennen ist, dass ein von der Laserlichtquelle 2 erzeugter Ausgangsstrahlengang 5 winklig zu einem Strahlengang 6 (Empfängerstrahlengang) eines Empfängerlinsensystems 7 angeordnet ist.

Der optische Entfernungsmesser 1 umfasst ein spritzwasser- und schmutzgeschütztes Gehäuse 8 mit einer ersten Gehäuseöffnung 9 und einer zweiten, lateral davon beabstandeten Gehäuseöffnung 10. In der ersten Gehäuseöffnung 9 ist wasserdicht eine sphärische (hier plankonvexe) Glaslinse 11 des Empfängerlinsensystems 7 aufgenommen, die dort fest verankert ist und ortsfest relativ zu dem Photodetektor 3 angeordnet ist. In der zweiten Gehäuseöffnung 10 ist eine der Laserlichtquelle 2 zugeordnete sphärische Linse 13 aus Glas ortsfest angeordnet.

Im Strahlengang 6 befindet sich zwischen der sphärischen Glaslinse 11 und dem Photodetektor 3 eine asphärische Kunststofflinse 12 deren Position in gewissen Grenzen sowohl entlang des Strahlengangs 6 als auch lateral hierzu verstellbar ist, um den Fokus des Empfängerlinsensystems 7 mit dem Photodetektor 3 zur Deckung bringen zu können sowie um Abbildungsfehler zu korrigieren. Die asphärische Kunststofflinse 12 ist derart ausgebildet, dass die Parallaxe zwischen dem Ausgangsstrahlengang 5 und dem Strahlengang 6 des Empfängerlinsensystems 7 auch bei minimalen Entfernungen, von etwa 5cm zu vernachlässigen ist.

Bei dem gezeigten Empfängersystem 7 ist die bei den empfangenen Lichtstrahlen zu erzielende Vergenz zwischen der Glaslinse 11 und der Kunststofflinse 12 so verteilt, dass der Glaslinse 11 der Großteil der Vergenz zugeordnet ist, um Empfängerlinsensystem 7 zumindest weitgehend unempfindlich gegenüber Temperatur- und Feuchtigkeitseinwirkungen zu machen.

## Patentansprüche

1. Empfängerlinsensystem eines optischen Entfernungsmessers (1), zum Erfassen einer an einem Objekt reflektierten Lichtstrahlung, mit einer in einem Strahlengang (6) angeordneten Kunststofflinse (12), und einer im Strahlengang (6) angeordneten Glaslinse (11), **dadurch gekennzeichnet, dass** der Abstand zwischen der Glaslinse (11) und der Kunststofflinse (12), vorzugsweise durch eine verstellbare Anordnung der Kunststofflinse (12) relativ zu der feststehenden Glaslinse (11), einstellbar ist.

2. Empfängerlinsensystem nach Anspruch 1, **dadurch gekennzeichnet, dass** die Glaslinse (11) im Strahlengang (6) vor der Kunststofflinse (12) angeordnet ist.

3. Empfängerlinsensystem nach einem der Ansprüche 1 oder 2, **dadurch gekennzeichnet, dass** die Glaslinse (11) eine sphärische Linse, vorzugsweise eine plan-konvexe Linse, und/oder die Kunststofflinse (12) eine asphärische Linse ist.

4. Empfängerlinsensystem nach einem der vorhergehenden Ansprüche, **dadurch gekennzeichnet, dass** die Glaslinse (11) eine wesentlich höhere, vorzugsweise eine mindestens um den Faktor drei, oder Faktor fünf größere Vergenz der empfangenen Lichtstrahlung verursachend ausgebildet ist als die Kunststofflinse (12) und/oder, dass die Glaslinse (11) eine wesentlich größere, vorzugsweise mehr als dreimal so große, Oberflächenkrümmung und/oder einen wesentlich größeren, vorzugsweise mehr als dreimal so großen, Brechungsindex aufweist, als die Kunststofflinse (12).

5. Empfängerlinsensystem nach einem der vorhergehenden Ansprüche, **dadurch gekennzeichnet, dass** die Glaslinse (11) antireflektionsbeschichtet ist.

6. Optischer Entfernungsmesser, vorzugsweise Laserentfernungsmesser, mit einem Empfängerlinsensystem (7) nach einem der vorhergehenden Ansprüche.

7. Optischer Entfernungsmesser nach Anspruch 6, **dadurch gekennzeichnet, dass** ein Ausgangsstrahlengang (5) winklig zu dem Strahlengang (6) des Empfängerlinsensystems (7) angeordnet ist.

8. Optischer Entfernungsmesser nach einem der Ansprüche 6 oder 7, **dadurch gekennzeichnet, dass** ein Gehäuse (8) des Entfernungsmessers (1) spritzwassergeschützt und/oder wasserdicht und/oder schmutzgeschützt ausgebildet ist.

9. Optischer Entfernungsmesser nach einem der Ansprüche 6 bis 8, **dadurch gekennzeichnet, dass** das gesamte Empfängerlinsensystem (7) oder nur die Glaslinse (11) oder nur die Kunststofflinse (12) quer zum Strahlengang (6) relativ zu einem Photodetektor (3) verstellbar ist.

## Claims

1. Receiver lens system of an optical distance measuring device (1) for measuring a beam path which is reflected on an object, with a plastic lens (12) which is arranged in a beam path (6), and a glass lens (11) which is arranged in the beam path (6), **characterized in that** the distance between the glass lens (11) and the plastic lens (12) can be adjusted relative to the fixed glass lens (11), preferably by means of an adjustable arrangement of the plastic lens (12).

2. Receiver lens system according to Claim 1, **characterized in that** the glass lens (11) is arranged ahead of the plastic lens (12) in the beam path (6).

3. Receiver lens system according to one of Claims 1 or 2, **characterized in that** the glass lens (11) is a spherical lens, preferably a planar-convex lens and/or the plastic lens (12) is an aspherical lens.

4. Receiver lens system according to one of the preceding claims, **characterized in that** the glass lens (11) is embodied to bring about a substantially greater vergence of the received light radiation, preferably greater at least by a factor of three or a factor of five than the plastic lens (12), and/or **in that** the glass lens (11) has significantly greater surface curvature, preferably more than three times greater, and/or a significantly larger refractive index, preferably more than three times as large, than the plastic lens (12).

5. Receiver lens system according to one of the preceding claims, **characterized in that** the glass lens (11) is anti-reflection-coated.

6. Optical distance measuring device, preferably laser distance measuring device, having a receiver lens system (7) according to one of the preceding claims.

7. Optical distance measuring device according to Claim 6, **characterized in that** an output beam path (5) is arranged at an angle to the beam path (6) of the receiver lens system (7).

8. Optical distance measuring device according to one of Claims 6 or 7, **characterized in that** a housing (8) of the distance measuring device (1) is embodied so as to be protected from spray water and/or watertight and/or protected from dirt.

9. Optical distance measuring device according to one of Claims 6 to 8, **characterized in that** the entire receiver lens system (7) or only the glass lens (11) or only the plastic lens (12) can be adjusted transversely with respect to the beam path (6) relative to a photodetector (3).

## Revendications

1. Système de lentille de réception d'un dispositif de mesure de distance optique (1), destiné à détecter un rayonnement lumineux réfléchi par un objet, comprenant une lentille de matière plastique (12) disposée sur le chemin de faisceau (6) et une lentille de verre (11) disposée sur le chemin de faisceau (6), **caractérisé en ce que** l'espacement entre la lentille de verre (11) et la lentille de matière plastique (12) peut de préférence être réglé par l'intermédiaire d'un agencent réglable de la lentille de matière plastique (12) par rapport à la lentille de verre stationnaire (11).

2. Système de lentille de réception selon la revendication 1, **caractérisé en ce que** la lentille de verre (11) est disposée sur le chemin de faisceau (6) en amont de la lentille de matière plastique (12).

3. Système de lentille de réception selon l'une quelconque de la revendication 1 ou 2, **caractérisé en ce que** la lentille de verre (11) est une lentille sphérique, de préférence une lentille plan-convexe, et/ou **en ce que** la lentille de matière plastique (12) est une lentille asphérique.

4. Système de lentille de réception selon l'une quelconque des revendications précédentes, **caractérisé en ce que** la lentille de verre (11) est réalisée de manière à provoquer une vergence du faisceau lumineux reçu sensiblement supérieure, et de préférence supérieure d'au moins un facteur trois ou un facteur cinq à celle de la lentille de matière plastique (12), et/ou **en ce que** la lentille de verre (11) présente une courbure de surface sensiblement supérieure, de préférence plus de trois fois supérieure, et/ou un indice de réfraction sensiblement supérieur, de préférence plus de trois fois supérieur à l'indice de réfraction de la lentille de matière plastique (12).

5. Système de lentille de réception selon l'une quelconque des revendications précédentes, **caractérisé en ce que** la lentille de verre (11) est revêtue d'une couche antiréfléchissante.

6. Dispositif de mesure de distance optique, de préférence, dispositif de mesure de distance à laser, comportant un système de lentille de réception (7) selon l'une quelconque des revendications précédentes.

7. Dispositif de mesure de distance optique selon la revendication 6, **caractérisé en ce qu'**un chemin de faisceau de sortie (5) est disposé de manière à former un certain angle par rapport au chemin de faisceau (6) du système de lentille de réception (7).

8. Dispositif de mesure de distance optique selon l'une ou l'autre des revendications 6 et 7, **caractérisé en ce qu'**un boîtier (8) d'un dispositif de mesure de distance (1) est réalisé de manière à ce qu'il soit protégé contre les projections d'eau et/ou étanche à l'eau et/ou protégé de la salissure.

9. Dispositif optique de mesure de distance selon l'une quelconque des revendications 6 et 8, **caractérisé en ce que** l'ensemble du système de lentille de réception (7) ou **en ce que** seulement la lentille de verre (11) ou seulement la lentille de matière plastique (12) peut être réglée transversalement au chemin de faisceau (6) par rapport à un photodétecteur (3).
